# EUROPÄISCHE PATENTSCHRIFT

(11) **EP 1 619 783 B1**
(45) Veröffentlichungstag und Bekanntmachung des Hinweises auf die Patenterteilung: **24.02.2010**
(21) Anmeldenummer: 05405379.8
(22) Anmeldetag: 13.06.2005
(51) Int. Cl.: H02M 1/00, H02M 7/797

(54) **Spannungsanstiegsbegrenzte Umrichterschaltung**
Converter with limited voltage rise
Convertisseur avec un accroissement de la tension limité

(30) Priorität: 20.07.2004 DE 102004034946
(43) Veröffentlichungstag der Anmeldung: 25.01.2006
(73) Patentinhaber: ABB Schweiz AG, 5400 Baden (CH)
(72) Erfinder: Zuckerberger, Adrian, 5417 Untersiggenthal (CH); Joerg, Pieder, 7013 Domat/Ems (CH); Oedegard, Bjoern, 5300 Turgi (CH)
(74) Vertreter: ABB Patent Attorneys

(56) Entgegenhaltungen:
- EP-A- 0 321 865
- EP-A- 0 727 870
- NAGEL A ET AL: "Characterization of IGCTs for series connected operation" 8. Oktober 2000 (2000-10-08), INDUSTRY APPLICATIONS CONFERENCE, 2000. CONFERENCE RECORD OF THE 2000 IEEE 8-12 OCTOBER 2000, PISCATAWAY, NJ, USA,IEEE, PAGE(S) 1923 - 1929 , XP010521374 ISBN: 978-0-7803-6401-1 * das ganze Dokument *

## Beschreibung

### Technisches Gebiet

Die Erfindung bezieht sich auf das Gebiet der Leistungselektronik. Sie geht aus von einer Umrichterschaltung gemäss dem Oberbegriff des Anspruchs 1.

### Stand der Technik

Leistungshalbleiterschalter, insbesondere integrierte Thyristoren mit kommutierter Ansteuerelektrode (IGCT), werden derzeit vermehrt in der Umrichtertechnik und insbesondere in Umrichterschaltungen zur Schaltung von drei Spannungsniveaus eingesetzt. Eine solche Umrichterschaltung zur Schaltung von drei Spannungsniveaus ist in "Characterization of IGCTs for Series Connected Operation, Conference Record of Annual Meeting of IEEE Industry Applications Society, 2000, October". Darin umfasst die Umrichterschaltung einen durch zwei in Serie geschaltete Kondensatoren gebildeten Gleichspannungskreis, wobei der Gleichspannungskreis einen ersten Hauptanschluss und einen zweiten Hauptanschluss und einen durch die zwei benachbarten und miteinander verbundenen Kondensatoren gebildeten Teilanschluss aufweist. Der Kapazitätswert der beiden Kondensatoren ist üblicherweise gleich gross gewählt. Zwischen dem ersten Hauptanschluss und dem zweiten Hauptanschluss liegt eine Gleichspannung an, wobei zwischen dem ersten Hauptanschluss und dem Teilanschluss, d.h. am einen Kondensator folglich die halbe Gleichspannung anliegt und zwischen dem Teilanschluss und dem zweiten Hauptanschluss, d.h. am anderen Kondensator folglich ebenfalls die halbe Gleichspannung an.

Ferner weist die Umrichterschaltung ein erstes Stromanstiegsbegrenzungsnetzwerk auf, wobei eine Induktivität und ein Widerstand des ersten Stromanstiegsbegrenzungsnetzwerks mit dem ersten Hauptanschluss verbunden ist, eine Kapazität des ersten Stromanstiegsbegrenzungsnetzwerks mit dem Widerstand und mit dem Teilanschluss verbunden ist und eine Diode des ersten Stromanstiegsbegrenzungsnetzwerks mit dem Verbindungspunkt des Widerstands mit der Kapazität verbunden ist. Desweiteren weist die Umrichterschaltung ein zweites Stromanstiegsbegrenzungsnetzwerk auf, wobei eine Induktivität und ein Widerstand des zweiten Stromanstiegsbegrenzungsnetzwerks mit dem zweiten Hauptanschluss verbunden ist, eine Kapazität des zweiten Stromanstiegsbegrenzungsnetzwerks mit dem Widerstand und mit dem Teilanschluss verbunden ist und eine Diode des zweiten Stromanstiegsbegrenzungsnetzwerks mit dem Verbindungspunkt des Widerstands mit der Kapazität verbunden ist. Darüber hinaus ist ein erster, zweiter, dritter und vierter ansteuerbarer bidirektionaler Leistungshalbleiterschalter und ein fünfter und sechster nicht ansteuerbarer unidirektionaler Leistungshalbleiterschalter vorgesehen, wobei der erste, zweite, dritte und vierte Leistungshalbleiterschalter in Serie geschaltet sind und der erste Leistungshalbleiterschalter mit der Induktivität des ersten Stromanstiegsbegrenzungsnetzwerks und der vierte Leistungshalbleiterschalter mit der Induktivität des zweiten Stromanstiegsbegrenzungsnetzwerks verbunden ist. Der fünfte und sechste Leistungshalbleiterschalter ist in Serie geschaltet, wobei der Verbindungspunkt des fünften Leistungshalbleiterschalters mit dem sechsten Leistungshalbleiterschalter mit dem Teilanschluss verbunden ist, der fünfte Leistungshalbleiterschalter mit dem Verbindungspunkt des ersten Leistungshalbleiterschalters mit dem zweiten Leistungshalbleiterschalter verbunden ist und der sechste Leistungshalbleiterschalter mit dem Verbindungspunkt des dritten Leistungshalbleiterschalters mit dem vierten Leistungshalbleiterschalter verbunden ist.

Zum ersten, zweiten, dritten und vierten ansteuerbaren bidirektionalen Leistungshalbleiterschalter ist jeweils eine Serienschaltung eines Widerstands mit einer Kapazität parallel geschaltet, wobei die Kapazität einen Wert von typischerweise 500nF und der Widerstand einen Wert typischerweise 1Ohm aufweist. Die jeweilige Serienschaltung des Widerstands mit der Kapazität mit der vorstehend erwähnten wertemässigen Auslegung dient dazu, eine ausgeglichene Spannungsverteilung an dem zugehörigen Leistungshalbleiterschalter bei Schaltzustandsübergängen, d.h. beim Übergang vom eingeschalteten Zustand zum ausgeschalteten Zustand oder vom ausgeschalteten Zustand zum eingeschalteten Zustand, zu erreichen.

Problematisch bei einer Umrichterschaltung nach "Characterization of IGCTs for Series Connected Operation, Conference Record of Annual Meeting of IEEE Industry Applications Society, 2000, October" ist, dass durch die beschriebene wertemässige Auslegung des Widerstands und der Kapazität der Serienschaltung bei der Abschaltung des zugehörigen Leistungshalbleiterschalters ein hoher Spannungsanstieg bei gleichzeitig hohem Strom auftritt, was zu sehr hohen Abschaltverlusten und dynamischen Überhöhungen der elektrischen Feldstärke im Leistungshalbleiterschalter führt. Solche erhöhten Abschaltverluste und Feldstärken am jeweiligen Leistungshalbleiterschalter können aber diesen beschädigen oder gar zerstören.

In der EP 0 321 865 B1 ist darüber hinaus ein Dreipunkt-Wechselrichter offenbart, welcher ein erstes Spannungsanstiegsbegrenzungsnetzwerk und ein zweites Spannungsanstiegsbegrenzungsnetzwerk aufweist. Das erste Spannungsanstiegsbegrenzungsnetzwerk ist parallel zum ersten Leistungshalbleiterschalter des Dreipunkt-Wechselrichters und das zweite Spannungsanstiegsbegrenzungsnetzwerk ist parallel zum vierten Leistungshalbleiterschalter des Dreipunkt-Wechselrichters geschaltet, wobei jedes Spannungsanstiegsnetzwerk durch eine Diode und eine Kapazität gebildet ist.

Ferner ist in der EP 0727 870 A2 eine Umrichterschaltung angegeben, welche ein Kurzschlusselement aufweist.

### Darstellung der Erfindung

Aufgabe der Erfindung ist es deshalb, eine Umrichterschaltung der eingangs genannten Art derart weiterzuentwickeln, dass die Abschaltverluste an Leistungshalbleiterschaltern der Umrichterschaltung minimiert werden können. Diese Aufgabe wird durch die Merkmale des Anspruchs 1 gelöst. In den abhängigen Ansprüchen sind vorteilhafte Weiterbildungen der Erfindung angegeben.

Die erfndungsgemässe Umrichterschaltung umfasst einen durch zwei in Serie geschaltete Kondensatoren gebildeten Gleichspannungskreis, wobei der Gleichspannungskreis einen ersten Hauptanschluss und einen zweiten Hauptanschluss und einen durch die zwei benachbarten und miteinander verbundenen Kondensatoren gebildeten Teilanschluss aufweist. Ferner ist ein erstes Stromanstiegsbegrenzungsnetzwerk vorgesehen, wobei eine Induktivität und ein Widerstand des ersten Stromanstiegsbegrenzungsnetzwerks mit dem ersten Hauptanschluss verbunden ist, eine Kapazität des ersten Stromanstiegsbegrenzungsnetzwerks mit dem Widerstand und mit dem Teilanschluss verbunden ist und eine Diode des ersten Stromanstiegsbegrenzungsnetzwerks mit dem Verbindungspunkt des Widerstands mit der Kapazität verbunden ist. Desweiteren weist die erfindungsgemässe Umrichterschaltung ein zweites Stromanstiegsbegrenzungsnetzwerk auf, wobei eine Induktivität und ein Widerstand des zweiten Stromanstiegsbegrenzungsnetzwerks mit dem zweiten Hauptanschluss verbunden ist, eine Kapazität des zweiten Stromanstiegsbegrenzungsnetzwerks mit dem Widerstand und mit dem Teilanschluss verbunden ist und eine Diode des zweiten Stromanstiegsbegrenzungsnetzwerks mit dem Verbindungspunkt des Widerstands mit der Kapazität verbunden ist. Darüber hinaus ist ein erster, zweiter, dritter und vierter ansteuerbarer bidirektionaler Leistungshalbleiterschalter und ein fünfter und sechster nicht ansteuerbarer unidirektionaler Leistungshalbleiterschalter vorgesehen, wobei der erste, zweite, dritte und vierte Leistungshalbleiterschalter in Serie geschaltet sind und der erste Leistungshalbleiterschalter mit der Induktivität des ersten Stromanstiegsbegrenzungsnetzwerks und der vierte Leistungshalbleiterschalter mit der Induktivität des zweiten Stromanstiegsbegrenzungsnetzwerks verbunden ist. Der fünfte und sechste Leistungshalbleiterschalter ist in Serie geschaltet, wobei der Verbindungspunkt des fünften Leistungshalbleiterschalters mit dem sechsten Leistungshalbleiterschalter mit dem Teilanschluss verbunden ist, der fünfte Leistungshalbleiterschalter mit dem Verbindungspunkt des ersten Leistungshalbleiterschalters mit dem zweiten Leistungshalbleiterschalter verbunden ist und der sechste Leistungshalbleiterschalter mit dem Verbindungspunkt des dritten Leistungshalbleiterschalters mit dem vierten Leistungshalbleiterschalter verbunden ist. Erfindungsgemäss ist ein erstes Spannungsanstiegsbegrenzungsnetzwerk parallel zum ersten Leistungshalbleiterschalter geschaltet und mit der Diode des ersten Stromanstiegsbegrenzungsnetzwerks verbunden. Weiterhin ist erfindungsgemäss ein zweites Spannungsanstiegsbegrenzungsnetzwerk parallel zum vierten Leistungshalbleiterschalter geschaltet und mit der Diode des zweiten Stromanstiegsbegrenzungsnetzwerks verbunden.

Vorteilhaft ist es mittels des erfindungsgemässen ersten und zweiten Spannungsanstiegsbegrenzungsnetzwerks möglich, den Spannungsanstieg bei der Abschaltung des ersten, zweiten, dritten, vierten, fünften und sechsten Leistungshalbleiterschalters zu begrenzen, was zu einer signifikanten Verringerung der Abschaltverluste sowie einer signifikanten Erhöhung des maximal abschaltbaren Stromes führt. Der jeweilige Leistungshalbleiterschalter kann dadurch weitestgehend vor einer Beschädigung oder Zerstörung geschützt werden.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

### Kurze Beschreibung der Zeichnungen

Es zeigen:
- Fig. 1: eine erste Ausführungsform einer erfindungsgemässen Umrichterschaltung und
- Fig. 2: eine zweite Ausführungsform der erfindungsgemässen Umrichterschaltung.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

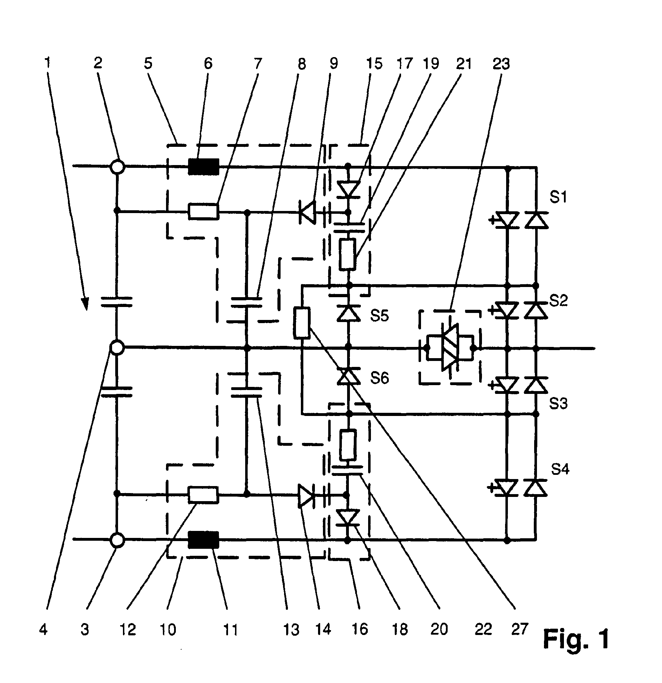

In Fig. 1 ist eine erste Ausführungsform der erfindungsgemässen Umrichterschaltung gezeigt. Die Umrichterschaltung gemäss Fig. 1 umfasst einen durch zwei in Serie geschaltete Kondensatoren gebildeten Gleichspannungskreis 1, wobei der Gleichspannungskreis 1 einen ersten Hauptanschluss 2 und einen zweiten Hauptanschluss 3 und einen durch die zwei benachbarten und miteinander verbundenen Kondensatoren gebildeten Teilanschluss 4 aufweist. Ferner ist bei der erfindungsgemässen Umrichterschaltung nach Fig. 1 ein erstes Stromanstiegsbegrenzungsnetzwerk 5 vorgesehen, wobei gemäss Fig. 1 eine Induktivität 6 und ein Widerstand 7 des ersten Stromanstiegsbegrenzungsnetzwerks 5 mit dem ersten Hauptanschluss 2 verbunden ist, eine Kapazität 8 des ersten Stromanstiegsbegrenzungsnetzwerks 5 mit dem Widerstand 7 und mit dem Teilanschluss 4 verbunden ist und eine Diode 9 des ersten Stromanstiegsbegrenzungsnetzwerks 5 mit dem Verbindungspunkt des Widerstands 7 mit der Kapazität 8 verbunden ist. Weiterhin ist gemäss Fig. 1 ein zweites Stromanstiegsbegrenzungsnetzwerk 10 vorgesehen, wobei eine Induktivität 11 und ein Widerstand 12 des zweiten Stromanstiegsbegrenzungsnetzwerks 10 mit dem zweiten Hauptanschluss 3 verbunden ist, eine Kapazität 13 des zweiten Stromanstiegsbegrenzungsnetzwerks 10 mit dem Widerstand 12 und mit dem Teilanschluss 4 verbunden ist und eine Diode 14 des zweiten Stromanstiegsbegrenzungsnetzwerks 10 mit dem Verbindungspunkt des Widerstands 12 mit der Kapazität 13 verbunden ist. Darüber hinaus weist die erfindungsgemässe Umrichterschaltung einen ersten, zweiten, dritten und vierten ansteuerbaren bidirektionalen Leistungshalbleiterschalter S1, S2, S3, S4 und einen fünften und sechsten nicht ansteuerbaren unidirektionalen Leistungshalbleiterschalter S5, S6 auf. Der fünfte und sechste Leistungshalbleiterschalter S5, S6 ist ein nicht ansteuerbarer unidirektionaler Leistungshalbleiterschalter, jeweils gebildet durch eine Diode. Somit bildet der fünfte und sechste Leistungshalbleiterschalter S5 und S6 eine passive Klemmschaltgruppe. Vorzugsweise ist der erste, zweite, dritte und vierte ansteuerbare bidirektionale Leistungshalbleiterschalter S1, S2, S3, S4 jeweils durch einen integrierten Thyristor mit kommutierter Ansteuerelektrode und durch eine zu dem Thyristor antiparallel geschaltete Diode gebildet. Ferner ist der fünfte und sechste nicht ansteuerbare unidirektionale Leistungshalbleiterschalter S5, S6 vorzugsweise jeweils durch eine Diode gebildet.

Gemäss Fig. 1 sind der erste, zweite, dritte und vierte Leistungshalbleiterschalter S1, S2, S3, S4 in Serie geschaltet und der erste Leistungshalbleiterschalter S1 ist mit der Induktivität 6 des ersten Stromanstiegsbegrenzungsnetzwerks 5 und der vierte Leistungshalbleiterschalter S4 mit der Induktivität 11 des zweiten Stromanstiegsbegrenzungsnetzwerks 10 verbunden. Desweiteren ist der fünfte und sechste Leistungshalbleiterschalter S5, S6 in Serie geschaltet, der Verbindungspunkt des fünften Leistungshalbleiterschalters S5 mit dem sechsten Leistungshalbleiterschalter S6 mit dem Teilanschluss 4 verbunden, der fünfte Leistungshalbleiterschalter S6 mit dem Verbindungspunkt des ersten Leistungshalbleiterschalters S1 mit dem zweiten Leistungshalbleiterschalter S2 verbunden und der sechste Leistungshalbleiterschalter S6 mit dem Verbindungspunkt des dritten Leistungshalbleiterschalters S3 mit dem vierten Leistungshalbleiterschalter S4 verbunden. Erfindungsgemäss ist ein erstes Spannungsanstiegsbegrenzungsnetzwerk 15 parallel zum ersten Leistungshalbleiterschalter S1 geschaltet und mit der Diode 9 des ersten Stromanstiegsbegrenzungsnetzwerks 5 verbunden. Ferner ist ein zweites Spannungsanstiegsbegrenzungsnetzwerk 16 parallel zum vierten Leistungshalbleiterschalter S4 geschaltet und mit der Diode 14 des zweiten Stromanstiegsbegrenzungsnetzwerks 10 verbunden.

Das erste Spannungsanstiegsbegrenzungsnetzwerk 15 bewirkt beim Abschaltvorgang des ersten beziehungsweise dritten und fünften Leistungshalbleiterschalters S1, S3, S5, dass ein Strom in die Kapazität 19 des ersten Spannungsanstiegsbegrenzungsnetzwerks 15 getrieben wird, so dass der Spannungsanstieg am ersten beziehungsweise dritten und fünften Leistungshalbleiterschalters S1, S3, S5, begrenzt wird. Zudem bewirkt das zweite Spannungsanstiegsbegrenzungsnetzwerk 16 beim Abschaltvorgang des zweiten beziehungsweise vierten und sechsten Leistungshalbleiterschalters S2, S4, S6, dass ein Strom in die Kapazität 20 des zweiten Spannungsanstiegsbegrenzungsnetzwerks 16 getrieben wird, so dass der Spannungsanstieg am zweiten beziehungsweise vierten und sechsten Leistungshalbleiterschalters S2, S4, S6, begrenzt wird. Die Begrenzung des Spannungsanstiegs führt vorteilhaft zu einer signifikanten Verringerung der Abschaltverluste sowie zu einer signifikanten Erhöhung des maximal abschaltbaren Stromes an den jeweiligen Leistungshalbleiterschaltern S1, S2, S3, S4, S5, S6, wodurch diese weitestgehend vor einer Beschädigung oder Zerstörung geschützt werden können.

Gemäss Fig. 1 ist das erste und zweite Spannungsanstiegsbegrenzungsnetzwerk 15, 16 vorzugsweise jeweils durch eine Serieschaltung einer Diode 17, 18, einer Kapazität 19, 20 und einem Widerstand 21, 22 gebildet. Die Diode 9 des ersten Stromanstiegsbegrenzungsnetzwerks 5 ist nach Fig. 1 mit dem Verbindungspunkt der Diode 17 mit der Kapazität 19 des ersten Spannungsanstiegsbegrenzungsnetzwerks 15 verbunden. Insbesondere ist die Diode 17 des ersten Spannungsanstiegsbegrenzungsnetzwerks 15 mit dem Verbindungspunkt des ersten Leistungshalbleiterschalters S1 mit der Induktivität 6 des ersten Stromanstiegsbegrenzungsnetzwerks 5 verbunden. Weiterhin ist die Diode 14 des zweiten Stromanstiegsbegrenzungsnetzwerks 10 gemäss Fig. 1 mit dem Verbindungspunkt der Diode 18 mit der Kapazität 20 des zweiten Spannungsanstiegsbegrenzungsnetzwerks 16 verbunden. Insbesondere ist die Diode 18 des zweiten Spannungsanstiegsbegrenzungsnetzwerks 16 mit dem Verbindungspunkt des vierten Leistungshalbleiterschalters S4 mit der Induktivität 11 des zweiten Stromanstiegsbegrenzungsnetzwerks 10 verbunden.

Gemäss Fig. 1 weist die erfindungsgemässe Umrichterschaltung ein ansteuerbares Kurzschlusselement 23 auf, welches mit dem Teilanschluss 4 und mit dem Verbindungspunkt des zweiten mit dem dritten Leistungshalbleiterschalter S2, S3 verbunden ist. Das ansteuerbare Kurzschlusselement 23 lässt sich somit sehr einfach in den bestehenden Verbund der Leistungshalbleiterschalter S1, S2, S3, S4, S5, S6 der Umrichterschaltung integrieren, so dass vorteilhaft Platz gespart werden kann. Das ansteuerbare Kurzschlusselement 23 dient bei einem Kurzschluss in einem oder mehreren der Leistungshalbleiterschalter S1, S2, S3, S4, S5, S6 dazu, dass ein durch den Kurzschluss bedingter Kurzschlussstrom aus den Kondensatoren des Gleichspannungskreises 1 nur sehr kurz über den oder die kurzschlussbehafteten Leistungshalbleiterschalter S1, S2, S3, S4, S5, S6 und dann über das Kurzschlusselement 23 zum Teilanschluss 4 gelenkt wird, damit das oder die kurzschlussbehafteten Leistungshalbleiterschalter S1, S2, S3, S4, S5, S6 nicht weiter beschädigt, belastet oder zerstört werden. Das ansteuerbare Kurzschlusselement 23 gemäss Fig. 1 dient zudem bei einem Kurzschluss an einer oder mehreren Phasen eines an die Umrichterschaltung angeschlossenen elektrischen Wechselspannungsnetzes dazu, dass ein durch den Kurzschluss bedingter Kurzschlussstrom aus den Phasen nicht oder nur mit einer kleinen Amplitude über die Leistungshalbleiterschalter S1, S2, S3, S4, S5, S6, insbesondere über die Dioden der die Leistungshalbleiterschalter S1, S2, S3, S4, S5, S6 fliesst, damit die Leistungshalbleiterschalter S1, S2, S3, S4, S5, S6 nicht weiter oder überhaupt nicht beschädigt, belastet oder zerstört werden. Ein solcher Kurzschlussstrom bzw. Fehlerstrom wird in diesem Fall über das Kurzschlusselement 17 zum Teilanschluss 4 gelenkt. Das Kurzschlusselement 23 wird dann angesteuert, wenn mittels einer Detektionseinrichtung ein Kurzschlussstrom detektiert wird.

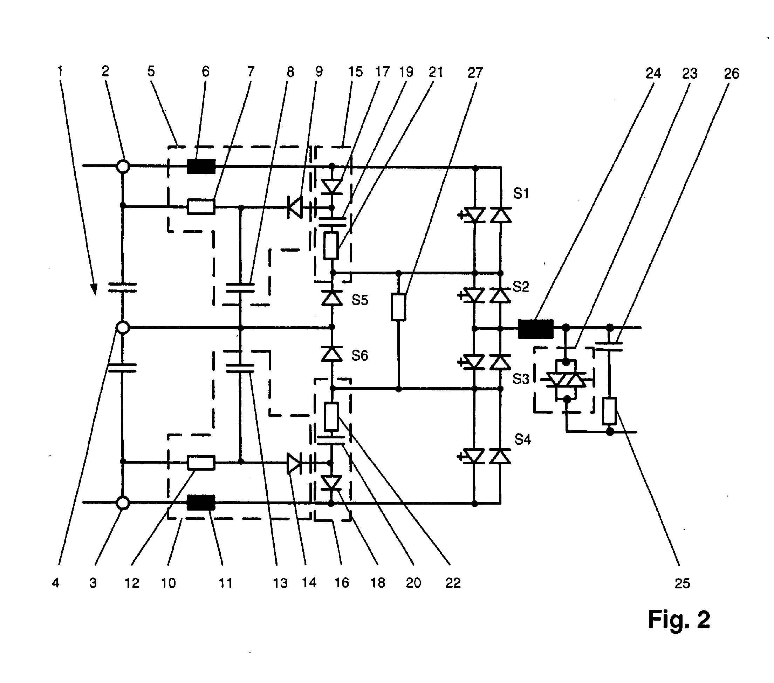

In Fig. 2 ist eine zweite Ausführungsform der erfindungsgemässen Umrichterschaltung gezeigt. Die zweite Ausführungsform gemäss Fig. 2 unterscheidet sich von der vorstehend detailliert beschriebenen ersten Ausführungsform gemäss Fig. 1 darin, dass ein ansteuerbares Kurzschlusselement vorgesehen ist, welches über eine Induktivität 24 mit dem Verbindungspunkt des zweiten mit dem dritten Leistungshalbleiterschalter S2, S3 verbunden ist, wobei eine Serienschaltung eines Widerstands 25 mit einer Kapazität 26 parallel zu dem ansteuerbaren Kurzschlusselement 23 geschaltet ist. Die Induktivität 24 und Serienschaltung des Widerstands 25 mit der Kapazität 26 sind optional. Die vorstehend beschriebene Verschaltung der Induktivität 24, des Widerstands 25 und der Kapazität 26 stellt beim Einschalten des Kurzschlusselementes 23 eine Stromanstiegsbegrenzungseinrichtung, d.h. der Stromanstieg beim Einschalten wird begrenzt, sowie beim Abschalten des Kurzschlusselementes 23 eine Spannungsanstiegsbegrenzungseinrichtung, d.h. der Spannungsanstieg beim Abschalten wird begrenzt, dar. Dieses ansteuerbare Kurzschlusselement 23 gemäss Fig. 2 dient bei einem Kurzschluss an einer oder mehreren Phasen eines an die Umrichterschaltung angeschlossenen elektrischen Wechselspannungsnetzes dazu, dass ein durch den Kurzschluss bedingter Kurzschlussstrom aus den Phasen nicht oder nur mit einer kleinen Amplitude über die Leistungshalbleiterschalter S1, S2, S3, S4, S5, S6, insbesondere über die Dioden der die Leistungshalbleiterschalter S1, S2, S3, S4, S5, S6 fliesst, damit die Leistungshalbleiterschalter S1, S2, S3, S4, S5, S6 nicht weiter oder überhaupt nicht beschädigt, belastet oder zerstört werden. Das Kurzschlusselement 23 wird dann angesteuert, wenn mittels einer Detektionseinrichtung ein Kurzschlussstrom detektiert wird, wobei das ansteuerbare Kurzschlusselement 23 dann die jeweils mit dem Kurzschlusselement 23 verbundene Phasen kurzschliesst.

Das Kurzschlusselement 23 nach Fig. 1 und Fig. 2 ist mit Vorteil aus zwei antiparallel geschalteten ansteuerbaren Leistungshalbleitern mit jeweiliger Druckkontaktierung, wie beispielsweise Scheibenthyristoren oder GTOs, gebildet. Der jeweilige ansteuerbare Leistungshalbleiterschalter des ansteuerbaren Kurzschlusselementes 23 kann aber auch durch einen integrierten Thyristor mit kommutierter Ansteuerelektrode oder durch einen Triac gebildet sein.

Gemäss Fig. 1 und Fig. 2 ist parallel zur Serienschaltung des fünften und sechsten Leistungshalbleiterschalters S5, S6 ein Symmetrierungswiderstand 27 geschaltet. Der Symmetrierungswiderstand 27 dient mit Vorteil dazu, beispielsweise bei einem Abschaltvorgang sämtlicher Leistungshalbleiterschalter S1, S2, S3, S4, S5, S6 eine nahezu symmetrische Spannungsverteilung über den Leistungshalbleiterschalter S1, S2, S3, S4, S5, S6 zu erzielen und somit einzelne Leistungshalbleiterschalter S1, S2, S3, S4, S5, S6 vor zu grossen Spannungen zu schützen.

### Bezugszeichenliste

- 1: Gleichspannungskreis
- 2: erster Hauptanschluss
- 3: zweiter Hauptanschluss
- 4: Teilanschluss
- 5: erstes Stromanstiegsbegrenzungsnetzwerk
- 6: Induktivität des ersten Stromanstiegsbegrenzungsnetzwerks
- 7: Widerstand des ersten Stromanstiegsbegrenzungsnetzwerks
- 8: Kapazität des ersten Stromanstiegsbegrenzungsnetzwerks
- 9: Diode des ersten Stromanstiegsbegrenzungsnetzwerks
- 10: zweites Stromanstiegsbegrenzungsnetzwerk
- 11: Induktivität des zweiten Stromanstiegsbegrenzungsnetzwerks
- 12: Widerstand des zweiten Stromanstiegsbegrenzungsnetzwerks
- 13: Kapazität des zweiten Stromanstiegsbegrenzungsnetzwerks
- 14: Diode des zweiten Stromanstiegsbegrenzungsnetzwerks
- 15: erstes Spannungsanstiegsbegrenzungsnetzwerk
- 16: zweites Spannungsanstiegsbegrenzungsnetzwerk
- 17: Diode des ersten Spannungsanstiegsbegrenzungsnetzwerks
- 18: Diode des zweiten Spannungsanstiegsbegrenzungsnetzwerks
- 19: Kapazität des ersten Spannungsanstiegsbegrenzungsnetzwerks
- 20: Kapazität des zweiten Spannungsanstiegsbegrenzungsnetzwerks
- 21: Widerstand des ersten Spannungsanstiegsbegrenzungsnetzwerks
- 22: Widerstand des zweiten Spannungsanstiegsbegrenzungsnetzwerks
- 23: Kurzschlusselement
- 24: Induktivität
- 25: Widerstand
- 26: Kapazität
- 27: Symmetrierungswiderstand
- S1: erste Leistungshalbleiterschalter
- S2: zweiter Leistungshalbleiterschalter
- S3: dritter Leistungshalbleiterschalter
- S4: vierter Leistungshalbleiterschalter
- S5: fünfter Leistungshalbleiterschalter
- S6: sechster Leistungshalbleiterschalter

## Patentansprüche

1. Umrichterschaltung mit einem durch zwei in Serie geschaltete Kondensatoren gebildeten Gleichspannungskreis (1), wobei der Gleichspannungskreis (1) einen ersten Hauptanschluss (2) und einen zweiten Hauptanschluss (3) und einen durch die zwei benachbarten und miteinander verbundenen Kondensatoren gebildeten Teilanschluss (4) umfasst, mit einem ersten Stromanstiegsbegrenzungsnetzwerk (5), wobei eine Induktivität (6) und ein Widerstand (7) des ersten Stromanstiegsbegrenzungsnetzwerks (5) mit dem ersten Hauptanschluss (2) verbunden ist, eine Kapazität (8) des ersten Stromanstiegsbegrenzungsnetzwerks (5) mit dem Widerstand (7) und mit dem Teilanschluss (4) verbunden ist und eine Diode (9) des ersten Stromanstiegsbegrenzungsnetzwerks (5) mit dem Verbindungspunkt des Widerstands (7) mit der Kapazität (8) verbunden ist,
mit einem zweiten Stromanstiegsbegrenzungsnetzwerk (10), wobei eine Induktivität (11) und ein Widerstand (12) des zweiten Stromanstiegsbegrenzungsnetzwerks (10) mit dem zweiten Hauptanschluss (3) verbunden ist, eine Kapazität (13) des zweiten Stromanstiegsbegrenzungsnetzwerks (10) mit dem Widerstand (12) und mit dem Teilanschluss (4) verbunden ist und eine Diode (14) des zweiten Stromanstiegsbegrenzungsnetzwerks (10) mit dem Verbindungspunkt des Widerstands (12) mit der Kapazität (13) verbunden ist,
mit einem ersten, zweiten, dritten und vierten ansteuerbaren bidirektionalen Leistungshalbleiterschalter (S1, S2, S3, S4) und mit einem fünften und sechsten nicht ansteuerbaren unidirektionalen Leistungshalbleiterschalter (S5, S6), wobei der erste, zweite, dritte und vierte Leistungshalbleiterschalter (S1, S2, S3, S4) in Serie geschaltet sind und der erste Leistungshalbleiterschalter (S1) mit der Induktivität (6) des ersten Stromanstiegsbegrenzungsnetzwerks (5) und der vierte Leistungshalbleiterschalter (S4) mit der Induktivität (11) des zweiten Stromanstiegsbegrenzungsnetzwerki (10) verbunden ist, und
wobei der fünfte und sechste Leistungshalbleiterschalter (S5, S6) in Serie geschaltet ist, der Verbindungspunkt des fünften Leistungshalbleiterschalters (S5) mit dem sechsten Leistungshalbleiterschalter (S6) mit dem Teilanschluss (4) verbunden ist, der fünfte Leistungshalbleiterschalter (S6) mit dem Verbindungspunkt des ersten LeistungshalbleiterSchalters (S1) mit dem zweiten Leistungshalbleiterschalter (S2) verbunden ist, der sechste Leistungshalbleiterschalter (S6) mit dem Verbindungspunkt des dritten Leistungshalbleiterschalters (S3) mit dem vierten Leistungshalbleiterschalter (S4) verbunden ist, ein erstes Spannungsanstiegsbegrenzungsnetzwerk (15) parallel zum ersten Leistungshalbleiterschalter (S1) geschaltet ist und mit der Diode (9) des ersten Stromanstiegsbegrenzungsnetzwerks (5) verbunden ist und ein zweites Spannungsanstiegsbegrenzungsnetzwerk (16) parallel zum vierten Leistungshalbleiterschalter (S4) geschaltet ist und mit der Diode (14) des zweiten Stromanstiegsbegrenzungsnetzwerks (10) verbunden ist,
**dadurch gekennzeichnet,**
**dass** das erste und zweite Spannungsanstiegsbegrenzungsnetzwerk (15, 16) jeweils durch eine Serieschaltung einer Diode (17, 18), einer Kapazität (19, 20) und einem Widerstand (21, 22) gebildet ist

2. Umrichterschaltung nach Anspruch 1, **dadurch gekennzeichnet, dass** die Diode (9) des ersten Stromanstiegsbegrenzungsnetzwerks (5) mit dem Verbindungspunkt der Diode (17) mit der Kapazität (19) des ersten Spannungsanstiegsbegrenzungsnetzwerks (15) verbunden ist, und
dass die Diode (14) des zweiten Stromanstiegsbegrenzungsnetzwarks (10) mit dem Verbindungspunkt der Diode (18) mit der Kapazität (20) des zweiten Spannungsanstiegsbegrenzungsnetzwerks (16) verbunden ist.

3. Umrichterschaltung nach einem der vorhergehenden Ansprüche, **dadurch gekennzeichnet, dass** der erste, zweite, dritte und vierte ansteuerbare bidirektionale Leistungshalbleiterschalter (51, S2, S3, S4) jeweils durch einen integrierten Thyristor mit kommutierter Ansteuerelektrode und durch eine zu dem Thyristor antiparallel geschaltete Diode gebildet ist.

4. Umrichterschaltung nach einem der vorhergehenden Ansprüche, **dadurch gekennzeichnet, dass** der fünfte und sechste nicht ansteuerbare unidirektionale Leistungshalbleiterschalter (S5, S6) jeweils durch eine Diode gebildet ist.

5. Umrichterschaltung nach einem der Ansprüche 1 bis 4, **dadurch gekennzeichnet, dass** ein ansteuerbares Kurzschlusselement (23) mit dem Teilanschluss (4) und mit dem Verbindungspunkt des zweiten mit dem dritten Leistungshalbleiterschalter (S2, S3) verbunden ist.

6. Umrichterschaltung nach einem der Ansprüche 1 bis 4, **dadurch gekennzeichnet, dass** ein ansteuerbares Kurzschlusselement (23) vorgesehen ist, welches über eine Induktivität (24) mit dem Verbindungspunkt des zweiten mit dem dritten Leistungshalbleiterschalter (S2, S3) verbunden ist, und
dass eine Serienschaltung eines Widerstands (25) mit einer Kapazität (26) parallel zu dem ansteuerbaren Kurzschlusselement (23) geschaltet ist.

7. Umrichterschaltung nach Anspruch 5 oder 6, **dadurch gekennzeichnet, dass** das ansteuerbare Kurzschlusselement (23) aus zwei antiparallel geschalteten ansteuerbaren Leistungshalbleiterschaltem mit jeweiliger Druckkontaktierung gebildet ist.

8. Umrichterschaltung nach Anspruch 7, **dadurch gekennzeichnet, dass** der jeweilige ansteuerbare Leistungshalbleiterschalter des ansteuerbaren Kurzschlusselementes (23) durch einen integrierten Thyristor mit kommutierter Ansteuerelektrode gebildet ist.

9. Umhchterschaltung nach einem der vorhergehenden Ansprüche, **dadurch gekennzeichnet, dass** parallel zur Serienschaltung des fünften und sechsten Leistungshalbleiterschalters (S5, S6) ein Symmetrierungswiderstand (27) geschaltet ist.

## Claims

1. Converter circuit comprising a DC voltage circuit (1) formed by two series-connected capacitors, wherein the DC voltage circuit (1) comprises a first main terminal (2) and a second main terminal (3) and a partial terminal (4) formed by the two adjacent capacitors that are connected to one another,
comprising a first current rise limiting network (5) wherein an inductance (6) and a resistor (7) of the first current rise limiting network (5) are connected to the first main terminal (2), a capacitance (8) of the first current rise limiting network (5) is connected to the resistor (7) and to the partial terminal (4), and a diode (9) of the first current rise limiting network (5) is connected to the junction point between the resistor (7) and the capacitance (8),
comprising a second current rise limiting network (10), wherein an inductance (11) and a resistor (12) of the second current rise limiting network (10) are connected to the second main terminal (3), a capacitance (13) of the second current rise limiting network (10) is connected to the resistor (12) and to the partial terminal (4), and a diode (14) of the second current rise limiting network (10) is connected to the junction point between the resistor (12) and the capacitance (13),
comprising a first, second, third and fourth driveable bidirectional power semiconductor switch (S1, S2, S3, S4) and comprising a fifth and sixth non-driveable unidirectional power semiconductor switch (S5, S6), wherein the first, second, third and fourth power semiconductor switches (S1, S2, S3, S4) are connected in series and the first power semiconductor switch (S1) is connected to the inductance (6) of the first current rise limiting network (5) and the fourth power semiconductor switch (S4) is connected to the inductance (11) of the second current rise limiting network (10), and wherein the fifth and sixth power semiconductor switches (S5, S6) are connected in series, the junction point between the fifth power semiconductor switch (S5) and the sixth power semiconductor switch (S6) is connected to the partial terminal (4), the fifth power semiconductor switch (S6) is connected to the junction point between the first power semiconductor switch (S1) and the second power semiconductor switch (S2), the sixth power semiconductor switch (S6) is connected to the junction point between the third power semiconductor switch (S3) and the fourth power semiconductor switch (S4), a first voltage rise limiting network (15) is connected in parallel with the first power semiconductor switch (S1) and is connected to the diode (9) of the first current rise limiting network (5) and a second voltage rise limiting network (16) is connected in parallel with the fourth power semiconductor switch (S4) and is connected to the diode (14) of the second current rise limiting network (10),
**characterized**
**in that** the first and second voltage rise limiting networks (15, 16) are respectively formed by a series circuit comprising a diode (17, 18), a capacitance (19, 20) and a resistor (21, 22).

2. Converter circuit according to Claim 1,
**characterized in that** the diode (9) of the first current rise limiting network (5) is connected to the junction point between the diode (17) and the capacitance (19) of the first voltage rise limiting network (15), and
**in that** the diode (14) of the second current rise limiting network (10) is connected to the junction point between the diode (18) and the capacitance (20) of the second voltage rise limiting network (16).

3. Converter circuit according to any of the preceding claims, **characterized in that** the first, second, third and fourth driveable bidirectional power semiconductor switches (S1, S2, S3, S4) are respectively formed by an integrated thyristor having a commutated drive electrode and by a diode reverse-connected in parallel with the thyristor.

4. Converter circuit according to any of the preceding claims, **characterized in that** the fifth and sixth non-driveable unidirectional power semiconductor switches (S5, S6) are respectively formed by a diode.

5. Converter circuit according to any of Claims 1 to 4, **characterized in that** a driveable short-circuit element (23) is connected to the partial terminal (4) and to the junction point between the second and third power semiconductor switches (S2, S3).

6. Converter circuit according to any of Claims 1 to 4, **characterized in that** a driveable short-circuit element (23) is provided, which is connected via an inductance (24) to the junction point between the second and third power semiconductor switches (S2, S3), and
**in that** a series circuit comprising a resistor (25) and a capacitance (26) is connected in parallel with the drivable short-circuit element (23).

7. Converter circuit according to Claim 5 or 6, **characterized in that** the driveable short-circuit element (23) is formed from two drivable power semiconductor switches that are reverse-connected in parallel and have respective pressure contact-connection.

8. Converter circuit according to Claim 7, **characterized in that** the respective driveable power semiconductor switch of the drivable short-circuit element (23) is formed by an integrated thyristor having a commutated drive electrode

9. Converter circuit according to any of the preceding claims, **characterized in that** a balancing resistor (27) is connected in parallel with the series circuit comprising the fifth and sixth power semiconductor switches (S5, S6).

## Revendications

1. Circuit convertisseur comprenant un circuit à tension continue (1) formé par deux condensateurs branchés en série, le circuit à tension continue (1) incluant une première borne principale (2) et une deuxième borne principale (3) ainsi qu'une borne intermédiaire (4) formée par les deux condensateurs voisins et reliés entre eux, comprenant un premier réseau de limitation de la croissance du courant (5), une inductance (6) et une résistance (7) du premier réseau de limitation de la croissance du courant (5) étant reliées avec la première borne principale (2), un condensateur (8) du premier réseau de limitation de la croissance du courant (5) étant relié avec la résistance (7) et avec la borne intermédiaire (4) et une diode (9) du premier réseau de limitation de la croissance du courant (5) étant reliée avec le point de liaison de la résistance (7) avec le condensateur (8), comprenant un deuxième réseau de limitation de la croissance du courant (10), une inductance (11) et une résistance (12) du deuxième réseau de limitation de la croissance du courant (10) étant reliées avec la deuxième borne principale (3), un condensateur (13) du deuxième réseau de limitation de la croissance du courant (10) étant relié avec la résistance (12) et avec la borne intermédiaire (4) et une diode (14) du deuxième réseau de limitation de la croissance du courant (10) étant reliée avec le point de liaison de la résistance (12) avec le condensateur (13), comprenant un premier, un deuxième, un troisième et un quatrième commutateurs semiconducteurs de puissance bidirectionnels commandables (S1, S2, S3, S4) et comprenant un cinquième et un sixième commutateurs semiconducteurs de puissance unidirectionnels non commandables (S5, S6), le premier, deuxième, troisième et quatrième commutateurs semiconducteurs de puissance (S1, S2, S3, S4) étant branchés en série et le premier commutateur semiconducteur de puissance (S1) étant relié avec l'inductance (6) du premier réseau de limitation de la croissance du courant (5) et le quatrième commutateur semiconducteur de puissance (S4) avec l'inductance (11) du deuxième réseau de limitation de la croissance du courant (10) et le cinquième et sixième commutateurs semiconducteurs de puissance (S5, S6) étant branchés en série, le point de liaison entre le cinquième commutateur semiconducteur de puissance (S5) et le sixième commutateur semiconducteur de puissance (S6) étant relié avec la borne intermédiaire (4), le cinquième commutateur semiconducteur de puissance (S6) étant relié avec le point de liaison entre le premier commutateur semiconducteur de puissance (S1) et le deuxième commutateur semiconducteur de puissance (S2), le sixième commutateur semiconducteur de puissance (S6) étant relié avec le point de liaison entre le troisième commutateur semiconducteur de puissance (S3) et le quatrième commutateur semiconducteur de puissance (S4), un premier réseau de limitation de la croissance de la tension (15) étant branché en parallèle avec le premier commutateur semiconducteur de puissance (S1) et relié avec la diode (9) du premier réseau de limitation de la croissance du courant (5) et un deuxième réseau de limitation de la croissance de la tension (16) étant branché en parallèle avec le quatrième commutateur semiconducteur de puissance (S4) et relié avec la diode (14) du deuxième réseau de limitation de la croissance du courant (10), **caractérisé en ce que** le premier et le deuxième réseaux de limitation de la croissance de la tension (15, 16) sont respectivement formés par un circuit série constitué d'une diode (17, 18), d'un condensateur (19, 20) et d'une résistance (21, 22).

2. Circuit convertisseur selon la revendication 1, **caractérisé en ce que** la diode (9) du premier réseau de limitation de la croissance du courant (5) est reliée avec le point de liaison entre la diode (17) et le condensateur (19) du premier réseau de limitation de la croissance de la tension (15) et que la diode (14) du deuxième réseau de limitation de la croissance du courant (10) est reliée avec le point de liaison entre la diode (18) et le condensateur (20) du deuxième réseau de limitation de la croissance de la tension (16).

3. Circuit convertisseur selon l'une des revendications précédentes, **caractérisé en ce que** le premier, deuxième, troisième et quatrième commutateurs semiconducteurs de puissance bidirectionnels commandables (S1, S2, S3, S4) sont respectivement formés par un thyristor intégré avec électrode d'excitation commutée et par une diode branchée en antiparallèle avec le thyristor.

4. Circuit convertisseur selon l'une des revendications précédentes, **caractérisé en ce que** le cinquième et sixième commutateurs semiconducteurs de puissance unidirectionnels non commandables (S5, S6) sont respectivement formés par une diode.

5. Circuit convertisseur selon l'une des revendications 1 à 4, **caractérisé en ce qu'**un élément de court-circuit commandable (23) est relié avec la borne intermédiaire (4) et avec le point de liaison entre le deuxième et le troisième commutateurs semiconducteurs de puissance (S2, S3).

6. Circuit convertisseur selon l' une des revendications 1 à 4, **caractérisé en ce qu'**il est prévu un élément de court-circuit commandable (23) qui est relié par le biais d'une inductance (24) avec le point de liaison entre le deuxième et le troisième commutateurs semiconducteurs de puissance (S2, S3) et qu'un circuit série composé d'une résistance (25) et d'un condensateur (26) est branché en parallèle avec l'élément de court-circuit commandable (23).

7. Circuit convertisseur selon la revendication 5 ou 6, **caractérisé en ce que** l'élément de court-circuit commandable (23) est formé par deux commutateurs semiconducteurs de puissance commandables branchés en antiparallèle avec à chaque fois un contact par pression.

8. Circuit convertisseur selon la revendication 7, **caractérisé en ce que** le commutateur semiconducteur de puissance commandable correspondant de l'élément de court-circuit commandable (23) est formé par un thyristor intégré avec électrode d'excitation commutée.

9. Circuit convertisseur selon l'une des revendications précédentes, **caractérisé en ce qu'**une résistance d'équilibrage des circuits (27) est branchée en parallèle avec le circuit série composé par le cinquième et le sixième commutateurs semiconducteurs de puissance (S5, S6) .
